Europäisches Patentamt

European Patent Office

Office européen des brevets

(11) Veröffentlichungsnummer: **0 032 258**
**A1**

(12) **EUROPÄISCHE PATENTANMELDUNG**

(21) Anmeldenummer: 80201013.2

(22) Anmeldetag: 27.10.80

(51) Int. Cl.³: **D 06 N 7/00**
**B 32 B 15/08, E 04 F 13/18**
**E 04 B 1/76**

(30) Priorität: 04.12.79 DE 2948688

(43) Veröffentlichungstag der Anmeldung:
22.07.81 Patentblatt 81/29

(84) Benannte Vertragsstaaten:
AT BE CH DE FR GB IT LI LU NL SE

(71) Anmelder: Sovilla, Heinz
2, Terrailles
CH-1304 Cossonay(CH)

(72) Erfinder: Sovilla, Heinz
2, Terrailles
CH-1304 Cossonay(CH)

(74) Vertreter: Jörchel, Dietrich R.A.
c/o BUGNION S.A. Conseils en Propriété Industrielle 10,
route de Florissant Case postale 42
CH-1211 - Genève 2(CH)

(54) Isoliertapete.

(57) Die Isoliertapete besteht aus einer wärmedämmenden Schicht (10), auf deren Vorder- bzw. Sichtseite ein die Beschaffenheit der Wärmeisolierung kaschierendes Dekor (14) und auf deren Rückseite eine Wärmestrahlung reflektierende Metallschicht (16) aufgebracht ist. Die wärmedämmende Schicht (10) weist wenigstens eine Materiallage aus einer Schaumkunststoffolie (12) mit geschlossenen, ein Gas enthaltenden Poren, einer Glasfaserfolie, einer Kunststoffolie aus Terephthalsäure-Aethylenglykol-Polyester oder einer Kunststoffnoppenfolie oder aber eine Kombination aus wenigstens zwei derartigen Materiallagen auf. Das Kekor (14) kann auch auf einer auf der Vorderseite der wärmedämmenden Schicht (10) befestigten Papier-, Vinyl- oder Stoff-tapete (20) aufgebracht, insbesondere aufgedruckt sein. Ferner kann wenigstens eine Materiallage der wärmedämmenden Schicht auf wenigstens einer Seite mit einer dunklen Schicht (18) zur Absorption der an der rückwärtigen Metallschicht reflektierten Wärmestrahlung versehen sein.

Die Metallschicht (16) ist vorzugsweise auf eine Polyesterfolie (22), die die Konvektion der Wärme behindert, aufgebracht.

Ein Klebemittel kann auf der Rückseite anwesend sein.

Fig. 1

Fig. 2

Croydon Printing Company Ltd.

## Isoliertapete

Die Erfindung bezieht sich auf eine Isoliertapete mit einer wärmedämmenden Schicht aus wenigstens einer Lage eines wärmeisolierenden Materials.

Tapeten mit wärmeisolierenden Eigenschaften sind als sogenannte Isoliertapeten bereits bekannt. Sie werden als Folie aus Schaumkunststoff mit einer Dicke von 3 bis 5 mm hergestellt und finden ausschliesslich als Untertapete Verwendung.

Nach dem Aufbringen solcher Isoliertapeten muss also die ganze Tapezierarbeit noch einmal wiederholt werden, um die Isoliertapete mit einer den Raum verschönernden dekorativ wirkenden Tapete abzudecken.

Die der Erfindung zugrunde liegende Aufgabe besteht darin, eine Tapete zu schaffen, mit deren Hilfe sich in einem Arbeitsgang Raumwände sowohl dekorativ verschönern, als auch gleichzeitig wirksam isolieren lassen.

Diese Aufgabe wird erfindungsgemäss dadurch gelöst, dass die Vorderseite der wärmedämmenden Schicht ein Dekor trägt.

Es handelt sich somit um eine Isoliertapete, die, wenn sie auf eine Wand aufgebracht ist, als solche nicht erkennbar ist und die in ästhetischer Hinsicht allen Erwartungen gerecht zu werden vermag, weil die erfindungsgemässe Ausbildung der Tapete alle Möglichkeiten einer beliebigen dekorativen Ausgestaltung bietet.

In der einfachsten Ausführungsform der Isoliertapete kann das Dekor unmittelbar auf die Vorderseite der wärmedämmenden Schicht aufgebracht, zum Beispiel aufgedruckt sein. Es ist aber auch möglich, dass das Dekor selbst auf eine Materialbahn bzw. Trägerfolie aufgebracht ist, die ihrerseits auf die wärmedämmende Schicht aufkaschiert ist.

Des weiteren lässt die Erfindung eine Vielzahl gestalterischer Abwandlungen der Tapete zu, durch die sich insbesondere ihre wärmedämmenden Eigenschaften verbessern lassen, indem vorzugsweise die Tapete aus mehreren Materiallagen bzw. sandwichartig ausgebildet wird.

Mögliche vorteilhafte Ausgestaltungen der Isoliertapete sind in den Unteransprüchen aufgeführt.

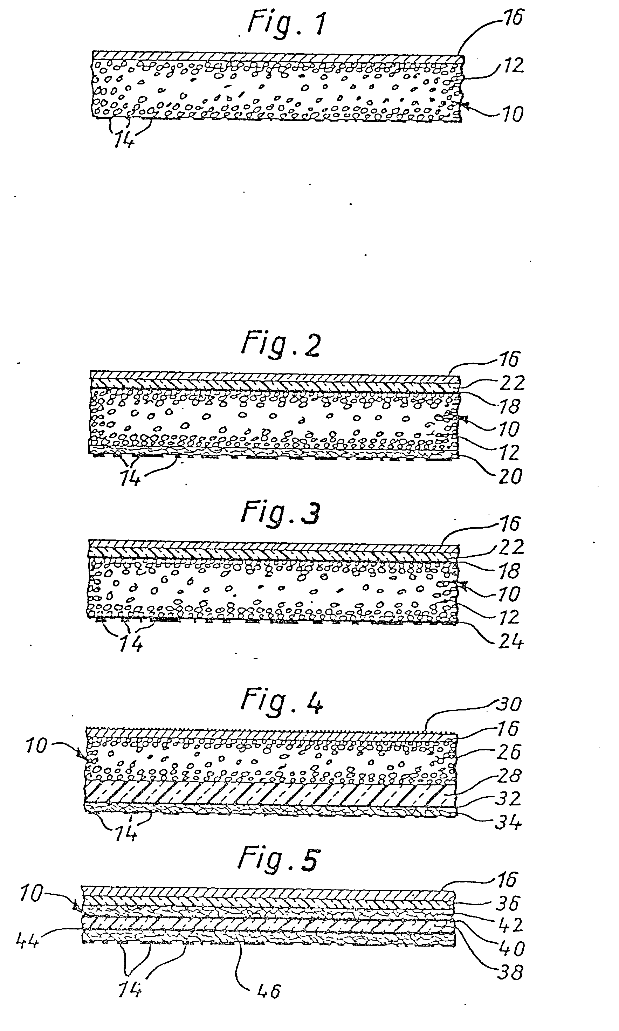

Die Erfindung wird anhand der Zeichnung näher erläutert, wobei die Figuren 1 bis 5 fünf Varianten der erfindungsgemässen Isoliertapete im Querschnitt in stark vergrössertem Massstab zeigen.

Die Isoliertapete gemäss Figur 1 weist eine als Ganzes mit 10 bezeichnete wärmedämmende Schicht auf, die aus einer Folie aus Schaumkunststoff 12 besteht. Diese Folie hat eine Dicke von beispielsweise einem oder auch mehreren Millimetern und ist mit Poren versehen, die vorzugsweise geschlossen sind und mit einem Gas wie $CO_2$ gefüllt sein können, um die wärmedämmenden Eigenschaften noch zu verbessern. Auf der Vorderseite der wärmedämmenden Schicht 10, also raumseitig, ist ein Dekor 14
bzw. eine Dekorstruktur unmittelbar aufgebracht, beispielsweise aufgedruckt. Das Dekor 14 deckt daher die
Vorderseite der wärmedämmenden Schicht 10 ab, so dass
deren Beschaffenheit von der Sichtseite bzw. Raumseite
der Isoliertapete her nicht erkennbar ist.

Auf der Rückseite der Schicht 10 ist eine reflektierende Schicht 16 aufgebracht, die eine Rückstrahlung der
in die Schicht 10 eindringenden Raumwärme bewirkt.
Diese reflektierende Schicht 16 kann durch Anlagern von
Metallpartikeln auf der Rückseite der Schicht 10 oder
durch eine geeignete Metallfolie, deren Dicke vorzugsweise ungefähr 12 u betragen kann, gebildet sein.

Wie Figur 2 zeigt, kann das Dekor 14 auch auf eine Materialbahn 20, insbesondere eine dekorative Papier-,
Vinyl-oder Stofftapete, aufgedruckt sein, die auf die
Schicht 10 aufkaschiert ist. Ferner ist die Wärmedämmung dadurch verbessert, dass die Schicht 10 aus mehreren Materiallagen besteht, und zwar aus einer Schaumstoffolie 12, einer auf deren Rückseite aufgebrachten
dunklen Schicht 18, zum Beispiel einer schwarzen Plastikfolie, und einer Isolierschicht 22, die für Wärmestrahlen durchlässig ist, Wärmeleitung und Wärmekonvektion jedoch hemmt und auf deren Rückseite wiederum eine
reflektierende Schicht 16 aufgebracht ist. Als Isolierschicht 22 ist vorzugsweise eine Folie aus dem Kunststoff Terephthalsäure-Aethylenglykol-Polyester gut
geeignet, welcher unter der Handelsbezeichnung Mylar
bekannt ist. Im folgenden wird deshalb diese Kunststoffolie als Mylarfolie bezeichnet.

Eine weitere Verbesserung kann nach Figur 3 dadurch erreicht werden, dass eine dunkle Schicht 18 nicht nur zwischen der Isolierschicht 22, insbesondere einer Mylarfolie, und der Schaumstoffolie 12, sondern auch auf der Rückseite des Dekors 14, also auf der Vorderseite der Schaumstoffolie 12, aufgebracht ist. Diese dunkle Schicht 24 nach Figur 3 kann beispielsweise durch eine schwarze Einfärbung der Kunststoffolie 12 gebildet sein. Auf diesen dunklen Hintergrund ist das Dekor 14 beispielsweise aufgedruckt.

Das Vorhandensein einer dunklen Schicht 18 nach Figur 2 bzw. zweier dunkler Schichten 18 und 24 nach Figur 3 bewirkt eine gute Absorption der durch die Metallschicht 16 reflektierten Wärmeenergien.

In Figur 4 ist eine Isoliertapete gezeigt, deren wärmedämmende Schicht 10 aus zwei Lagen verschiedener Kunststoffmaterialien gebildet ist, und zwar einer hinteren Folie 26 aus Schaumkunststoff und einer vorderen, auf diese Folie 26 aufkaschierten Mylarfolie 28. Die Folie 26 ist rückseitig metallisiert, und diese Metallschicht 16 ist noch mit einer Klebeschicht 30 beschichtet, durch die das Aufbringen der Isoliertapete auf Wandflächen erleichtert wird. Anstelle der Klebeschicht kann auf die Metallschicht 16 noch wenigstens eine weitere isolierende Schicht aufgebracht sein. Die Mylarfolie 28 ist an ihrer Vorderseite durch eine dunkle Schicht 32 abgedeckt, auf die eine das Dekor 14 tragende Papier- oder Vinyltapete 34 oder ein anderer geeigneter Dekorträger aufkaschiert ist. Natürlich kann ein Dekor auch direkt auf die dunkle Schicht 32 aufgebracht sein. Andererseits kann sich die dunkle Schicht auch zwischen den beiden Folien 26 und 28 befinden.

Figur 5 zeigt einen weiteren sandwichartigen Aufbau der wärmedämmenden Schicht 10, welche zwei Mylarfolien 36 und 38 aufweist, von denen die vordere Mylarfolie 38 beidseitig je eine dunkle Schicht 40 bzw. 44 trägt.

Zwischen der Schicht 40 und der hinteren Mylarfolie 36 ist eine für Infrarotstrahlen durchlässige, hinsichtlich Wärmeleitung jedoch isolierende Zwischenschicht 42 vorgesehen, die aus dem gleichen Kunststoff, aus Schaumstoffolie oder aus Papier bestehen kann. Die hintere Mylarfolie 36 ist ausserdem rückseitig metallisiert, wobei diese Metallschicht 16 noch mit einem Kleber oder mit einer isolierenden Schicht versehen sein kann. Die dunkle Schicht 44 auf der Vorderseite der Mylarfolie 38 ist mit einer aufkaschierten, das Dekor 14 tragenden Vinyl- oder Papiertapete 46, einer Stofftapete oder einer Tapete versehen, die aus einer nachträglich noch zu bedruckenden Materialbahn besteht. Anstelle einer Mylarfolie kann auch eine Vinylfolie verwendet werden.

Die wärmedämmende Schicht 10 kann allgemein wenigstens eine Schaumstoffolie 12, eine Mylarfolie, die rückseitig metallisiert sein kann, eine Folie aus einem anderen Kunststoff oder eine Lage aus Glasfasermaterial oder aber eine Kombination davon aufweisen.

Als wärmedämmende Schicht oder als Teil dieser Schicht kann ferner eine insbesondere als Doppelfolie ausgebildete Kunststoffolie vorgesehen sein, in welcher kleine Luftkapseln eingeschlossen sind. Diese Folie kann wellenförmig gestaltet und/oder mit in dichter gegenseitiger Zuordnung vorgesehenen Noppen oder Warzen ausgestattet sein, die ein Gas, insbesondere Luft, einschliessen. Solche, zum Beispiel aus Polyester bestehende Kunststoffolien zeichnen durch ein hohes Wärmedämmvermögen und ferner durch eine geringe Eigensteifigkeit aus und lassen sich daher vorteilhaft zu einem Wickel aufrollen. Solche Luftpolster- oder Noppenfolien sind deshalb für die Tapetenherstellung besonders gut geeignet, bei der mit sehr hohen Abzugs- und Wickelgeschwindigkeiten gearbeitet wird.

-6-

Gegebenenfalls kann die Isoliertapete mit Perforationen
zum Durchtritt von Wasserdampf versehen sein.

PATENTANSPRUECHE

1. Isoliertapete mit einer wärmedämmenden Schicht aus wenigstens einer Lage eines wärmeisolierenden Materials, dadurch gekennzeichnet, dass die Vorderseite der wärmedämmenden Schicht (10) ein Dekor (14) trägt.

2. Isoliertapete nach Anspruch 1, dadurch gekennzeichnet, dass das Dekor (14) unmittelbar auf die Vorderseite der wärmedämmenden Schicht (10) aufgebracht, insbesondere aufgedruckt ist.

3. Isoliertapete nach Anspruch 1, dadurch gekennzeichnet, dass das Dekor (14) auf einer Materialbahn (20;34; 46), insbesondere einer Papier-, Vinyl- oder Stofftapete, aufgebracht ist, welche auf der Vorderseite der wärmedämmenden Schicht (10) befestigt ist.

4. Isoliertapete nach einem der Ansprüche 1 bis 3, dadurch gekennzeichnet, dass sie rückseitig eine Klebeschicht (30) trägt.

5. Isoliertapete nach einem der Ansprüche 1 bis 4, dadurch gekennzeichnet, dass die wärmedämmende Schicht (10) auf ihrer Rückseite eine Wärmestrahlung reflektierende Schicht (16), insbesondere eine Metallschicht, trägt, die gegebenenfalls rückseitig noch mit einer Isolierschicht versehen ist.

6. Isoliertapete nach Anspruch 5, dadurch gekennzeichnet, dass im Abstand zur reflektierenden Schicht (16) mindestens eine dunkle, insbesondere schwarze Schicht (18,24,32,40,44) vorgesehen ist.

0032258

7. Isoliertapete nach Anspruch 6, dadurch gekennzeichnet, dass unmittelbar hinter dem Dekor (14) bzw. hinter der das Dekor aufweisenden Materialbahn (34;46) eine dunkle Schicht (32;44) aufgebracht ist.

8. Isoliertapete nach Anspruch 5, dadurch gekennzeichnet, dass die wärmedämmende Schicht (10) eine Wärmestrahlung durchlassende, jedoch Wärmekonvektion und Wärmeleitung verhindernde Materialbahn (22) aufweist, die vorzugsweise zwischen einer dunklen Schicht (18) und der reflektierenden Schicht (16) angeordnet ist.

9. Isoliertapete nach einem der Ansprüche 1 bis 8, dadurch gekennzeichnet, dass die wärmedämmende Schicht (10) wenigstens eine oder eine Kombination der folgenden Materiallagen aufweist: Eine Schaumstoffolie (12; 26), vorzugsweise mit geschlossenen, ein Gas wie Kohlendioxid enthaltenden Poren, eine aus Glasfasermaterial gebildete Folie, eine Kunststoffolie aus Terephthalsäure-Aethylenglykol-Polyester oder Vinyl, eine insbesondere als Doppelfolie ausgebildete wellenförmige Kunststoffolie mit Gas-, insbesondere Lufteinschlüssen, oder eine insbesondere als Doppelfolie ausgebildete Kunststoffnoppenfolie, in deren Noppen ein Gas, wie Luft, eingeschlossen ist.

10. Isoliertapete nach Anspruch 9, dadurch gekennzeichnet, dass die wärmedämmende Schicht wenigstens zwei Materiallagen (26,28) aufweist, von denen die eine Materiallage (26) Gaseinschlüsse enthält und die andere Lage (28) aus Terephthalsäure-Aethylenglykol-Polyester besteht, wobei vorzugsweise auf der vorderen Lage (28) oder zwischen den beiden Lagen (26,28) eine dunkle Schicht (32) vorgesehen ist.

11. Isoliertapete nach Anspruch 9, dadurch gekennzeichnet, dass zwischen dem Dekor (14) bzw. der das Dekor aufweisenden Materialbahn (46) und einer ersten folienförmigen Lage (38), insbesondere aus Terephthalsäure-Aethylenglykol-Polyester, eine dunkle Schicht (44) vorgesehen ist, dass zwischen der ersten Lage (38) und einer zweiten, insbesondere aus gleichem Kunststoff, aus Schaumstoffolie oder aus Papier bestehenden Lage (42) eine weitere dunkle Schicht (40) eingeschlossen ist und dass eine dritte folienförmige Lage (36), insbesondere aus Terephthalsäure-Aethylenglykol-Polyester, auf die zweite Lage (42) und an deren Rückseite die Metallschicht (16) aufgebracht ist.

12. Isoliertapete nach einem der vorangehenden Ansprüche, dadurch gekennzeichnet, dass sie in Querrichtung mit Perforationen versehen ist.

*Fig. 1*

16
12
10
14

*Fig. 2*

16
22
18
10
12
20
14

*Fig. 3*

16
22
18
10
12
24
14

*Fig. 4*

30
16
26
28
32
34
10
14

*Fig. 5*

10
16
36
42
40
38
44
14
46

0032258

## EUROPÄISCHER RECHERCHENBERICHT

Europäisches Patentamt

Nummer der Anmeldung

EP 80 20 1013

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| X | FR - A - 2 418 713 (PAGANINI) <br> * Patentansprüche * <br> --- | 1-4, 8,9 |
| X | US - A - 4 166 146 (TIBOR KOOS) <br> * Patentansprüche * <br> --- | 1-5, 8,9 |
| X | DE - A - 1 635 732 (ZUBER & Cie.) <br> * das ganze Dokument * <br> --- | 1,2, 4,9 |
| X | FR - A - 2 303 136 ( METZELER SCHAUM) <br> * insbesondere Abbildung 3 und Patentansprüche * <br> & Gebrauchsmuster G 75 07 196 <br> --- | 1-4,9 |
|  | GB - A - 2 011 835 (STANDARD PACKAGING) <br> * das ganze Dokument * <br> --- | 1 |
|  | FR - A - 2 339 030 (PIRELLI) <br> * Patentansprüche; Seite 8, Zeile 11 bis Seite 9, Zeile 10 * <br> & DE - A - 2 702 018 <br> -------- | 1,3,9 |

**KLASSIFIKATION DER ANMELDUNG (Int. Cl. ?)**

D 06 N 7/00
B 32 B 15/08
E 04 F 13/18
E 04 B 1/76

**RECHERCHIERTE SACHGEBIETE (Int. Cl.3)**

D 06 N 7/00
D 06 N 3/00
E 04 F 13/18
E 04 B 1/76
B 32 B 15/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-02-1981 | COUCKUYT |

EPA form 1503.1 05.78